# EUROPEAN PATENT SPECIFICATION

(11) **EP 2 563 008 B1**
(45) Date of publication and mention of the grant of the patent: **28.04.2021**
(21) Application number: 12180506.3
(22) Date of filing: 15.08.2012
(51) Int. Cl.: H04N 5/225, H04N 5/232

(54) **Method and apparatus for performing video communication in a mobile terminal**
Verfahren und Vorrichtung zur Durchführung von Videokommunikation auf einem tragbaren Endgerät
Procédé et appareil permettant d'effectuer une communication vidéo dans un terminal mobile

(30) Priority: 23.08.2011 US 201113215742; 06.08.2012 KR 20120085678
(43) Date of publication of application: 27.02.2013
(73) Proprietor: Samsung Electronics Co., Ltd., Suwon-si, Gyeonggi-do, 443-742 (KR)
(72) Inventor: Zhou, Zhinan, Richardson, Texas 75082 (US)
(74) Representative: HGF

(56) References cited:
- JP-A- 2004 048 648
- US-A1- 2009 102 859
- US-A1- 2009 234 473
- US-A1- 2010 220 180
- US-A1- 2010 304 788

## Description

### BACKGROUND OF THE INVENTION

### Field of the Invention

The present invention relates to a method and apparatus for performing video communication in a mobile terminal. More particularly, the present invention relates to a method and apparatus for performing video communication in a mobile terminal, by which during video communication in the mobile terminal, a panoramic image can be created and provided.

### Description of the Related Art

Mobile terminals were developed to provide wireless communication between users. As technology has advanced, mobile terminals now provide many additional features beyond simple telephone conversation. For example, mobile terminals are now able to provide additional functions such as an alarm, a Short Messaging Service (SMS), a Multimedia Message Service (MMS), electronic-mail (e-mail), games, an image capturing function using a mounted digital camera, a multimedia function for providing audio and video content, a scheduling function, and many more. With various features now provided, a mobile terminal has effectively become a necessity of daily life.

One of such additional functions now provided on many mobile terminals is a video communication function which includes video calling and/or messaging function. As it is currently supported, the video communication function captures an image of the user of the mobile terminal and provides the image of the user to another user during the video communication function.

However, the image transmitted by the mobile terminal is obtained using only a single camera which is mounted to one side of the mobile terminal. Furthermore, even if the mobile terminal has two or more cameras, for example a camera mounted on a front side of the mobile terminal and a camera mounted on a back side of the mobile terminal, the video communication function still only provides an image from one of the cameras. At most, the obtained image can be switched between an image obtained from the front camera and an image obtained from the back camera.

During operation of the video communication function, the user may want to show the surrounding environment in addition to the image of the user. However, there is currently no technology to support this function for a mobile device. Accordingly, there is a need for an apparatus and method for providing a panoramic image while performing a video communication function.

US 2009/0234473 discloses a system for presenting recorded data includes an electronic device and a database connectable to the electronic device over a communications network, the electronic device including a recording unit to record data from a first direction, a positional arrangement to determine positional data of the electronic device, a directional arrangement to determine directional data indicating the direction of the recorded data relative the position data; a memory including a first application stored thereon; and a control unit to execute the application to associate the directional data and the positional data to the recorded data and to transmit the recorded data with the associated positional and directional data to the database.

JP2004048648 discloses a method of forming a special effect image using a plurality of digital cameras having a communication function.

US 2010/0304788 discloses a mobile terminal that includes a camera module, a wireless communication unit to perform a video call with another party, a display to display a video call relevant image, a location information module to obtain location information of the mobile terminal, and a controller to obtain object information of an object within an image captured by the camera module based on the obtained location information of the mobile terminal. The controller may control the obtained object information to be transmitted to a terminal of the other party.

US 2009/102859 discloses apparatus and methods for providing a user augmented reality (UAR) service for a camera-enabled mobile device, so that a user of such mobile device can use the mobile device to obtain meta data regarding one or more images/video that are captured with such device.

US 2010/220180 discloses systems and methods are provided for capture control of video data from a capsule camera system having an on-board storage or wireless transmission.

### SUMMARY OF THE INVENTION

The invention is defined by the independent claims. Further aspects of the invention are outlined in the dependent claims. Where the term embodiment is used for describing unclaimed combinations of features, the term has to be understood as referring to examples useful for understanding the invention.

Accordingly, the present invention provides a method and apparatus for performing video communication in a mobile terminal, by which during execution of a video communication function, a panoramic image is created and provided.

The present invention also provides a method and apparatus for performing video communication in a mobile terminal which includes a plurality of cameras for capturing and combining images to provide a panoramic image during execution of a video communication function.

The present invention also provides a method and apparatus for performing video communication in a mobile terminal which captures a plurality of images using a respective plurality of cameras, transmits the plurality of images to a server, that receives image information from the server, and creates a panoramic image using the plurality of images and the image information from the server.

The present invention also provides a method and apparatus for performing video communication in a mobile terminal which captures and provides a plurality of images to a server, determines and provides metadata, such as location information, to the server, receives image information from the server based on the metadata, and creates a panoramic image using the plurality of images and the image information from the server.

The present invention also provides a server which receives image data from a mobile terminal and creates and transmits a panoramic image to the mobile terminal if image data related to the received image data is extracted.

In accordance with an aspect of the present invention, there is provided a method for performing video communication in a mobile terminal, the method including transmitting image data captured by a second camera of the mobile terminal to a server during video communication with another mobile terminal using a first camera of the mobile terminal; receiving image data associated with the captured image data from the server, creating, at the mobile terminal, a panoramic image by using the captured image data and the associated image data during the video communication; and transmitting the created panoramic image to the another mobile terminal which is performing the video communication.

In accordance with another aspect of the present invention, there is provided a method for performing video communication in a mobile terminal, the method including transmitting image data captured by a second camera of the mobile terminal to a server during video communication with another mobile terminal using a first camera of the mobile terminal; receiving, from the server, a panoramic image created using the captured image data during the video communication; and transmitting the received panoramic image to the another mobile terminal which is performing the video communication.

In accordance with still another aspect of the present invention, there is provided an apparatus for performing video communication in a mobile terminal, the apparatus including a first camera; a second camera; and a control unit configured to: transmit image data captured by a second camera of the mobile terminal to a server during video communication with another mobile terminal using a first camera of the mobile terminal, if receiving image data associated with the captured image data from the server, create at the mobile terminal, a panoramic image by using the captured image data and the associated image data during the video communication, and transmit the created panoramic image to the another mobile terminal which is performing the video communication..

In accordance with yet another aspect of the present invention, there is provided an apparatus for performing video communication in a mobile terminal, the apparatus including a first camera; a second camera; and a control unit configured to: transmit image data captured by a second camera of the mobile terminal to a server during video communication with another mobile terminal using a first camera of the mobile terminal, receive, from the server, panoramic image created using the captured image data during the video communication; and transmit the received panoramic image to the another mobile terminal which is performing the video communication..

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other features and advantages of an exemplary embodiment of the present invention will be more apparent from the following detailed description taken in conjunction with the accompanying drawings, in which:
FIG. 1A illustrates a system for implementing a panoramic video communication function according to a first exemplary embodiment of the present invention;
FIG. 1B illustrates a system for implementing a panoramic video communication function according to a second exemplary embodiment of the present invention;
FIG. 2 is a block diagram of a mobile terminal for providing a panoramic image according to an exemplary embodiment of the present invention;
FIG. 3A is a block diagram of a server for providing a panoramic image according to the first exemplary embodiment of the present invention;
FIG. 3B is a block diagram of a server for providing image data according to the second exemplary embodiment of the present invention;
FIG. 4 is a flowchart showing a process of executing a video communication function including a panoramic image by a mobile terminal according to an exemplary embodiment of the present invention; and
FIG. 5 shows a method for supporting a video communication function including a panoramic image by a server having a panoramic image processor to a mobile terminal according to the second embodiment of the present invention.

Throughout the drawings, it should be noted that like reference numbers are used to depict the same or similar elements, features, and structures.

### DETAILED DESCRIPTION OF THE EXEMPLARY EMBODIMENT

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

The following exemplary embodiments of the present invention are described as applied to a "mobile terminal." However, it is to be understood that this is merely a generic term and that the invention is equally applicable to any of a mobile phone, a palm sized Personal Computer (PC), a Personal Communication System (PCS), a Personal Digital Assistant (PDA), a Hand-held PC (HPC), a smart phone, an International Mobile Telecommunication 2000 (IMT-2000) terminal, a wireless Local Area Network (LAN) terminal, a laptop computer, a netbook, and the like. Accordingly, use of the term "mobile terminal" should not be used to limit application of the present inventive concepts to any certain type of apparatus or device.

Exemplary embodiments of the present invention include an apparatus and method for creating a panoramic view for use in a video communication function of a mobile terminal. The apparatus and method include the mobile terminal for capturing a plurality of images for use in creating the panoramic image and for performing the video communication function with another terminal. Also provided is a server that includes an image database in which image data is stored. By communicating with the server, the mobile terminal is able to receive image data and provide an augmented panoramic image using the received image data. Based on the following description, it will become apparent that there are several exemplary embodiments by which to implement the present invention. In a first exemplary embodiment, a mobile terminal is provided with a panoramic image processor so that a panoramic image is produced by the mobile terminal. In a second exemplary embodiment, a panoramic image processor is located remotely from the mobile terminal so that a panoramic image, produced remotely from the mobile terminal, is provided to the mobile terminal for use during execution of a video communication function. Also, in implementation of the second exemplary embodiment, the panoramic image processor may be included as a component in a remote server that is contacted by the mobile terminal, or may be a separate component that provides the panoramic image to the server, which in turn provides the panoramic image to the mobile terminal.

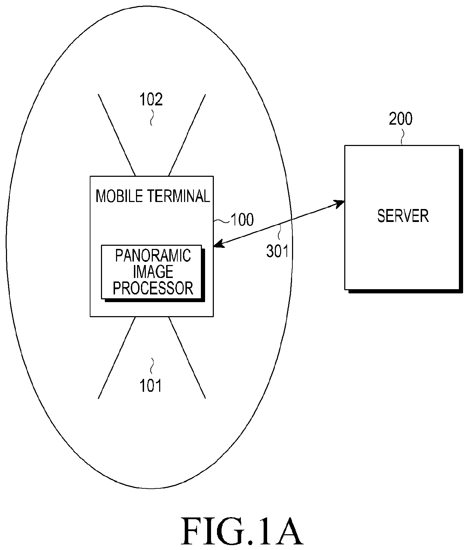

FIG. 1A illustrates a system for implementing a panoramic video communication function according to a first exemplary embodiment of the present invention.

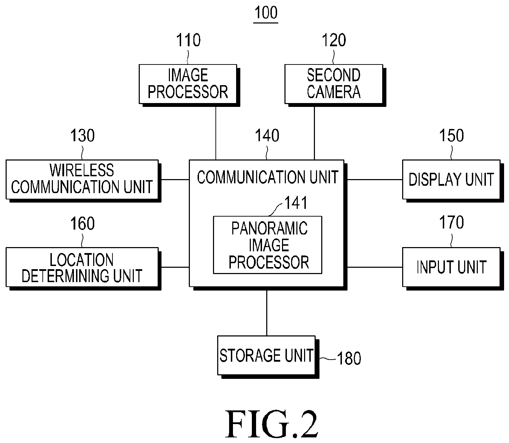

Referring to FIG. 1A, the system includes a mobile terminal 100 and a server 200. The mobile terminal 100, which will be described in more detail below with reference to FIG. 2, includes at least a first camera, a second camera, and a panoramic image processor.

In an exemplary implementation, the first camera is located on a first side of the mobile terminal 100. With that orientation, the first camera is able to obtain a first image 101 of the user of the mobile terminal 100 during execution of a video communication function. Also in an exemplary implementation, the second camera is located on a side of the mobile terminal 100 that is opposite to the side on which the first camera is located.

For example, if the first camera is located on the front side of the mobile terminal 100, the second camera is located on a back side of the mobile terminal 100. With the opposing orientation, the second camera is able to obtain a second image 102 of scenery surrounding the mobile terminal 100. Of course, while two cameras are described, it is to be understood that this is for ease of discussion purposes only and not to be considered a limitation on the present invention. Rather, additional cameras will allow for obtaining additional images, which, as will be discussed below, provide for a more accurate panoramic image.

As an example, the mobile terminal 100 may be considered as a cuboid having a camera on each face. As another example, the mobile terminal 100 may have one or more rounded surface such that two or more cameras placed on a rounded surface may have different fields of view when simultaneously obtaining images.

A user of the mobile terminal 100 may perform a video communication function with another party. During execution of the video communication function, the mobile terminal 100, using the first camera and the second camera, obtains the first image 101 and the second image 102. The first image 101, obtained by the first camera, includes the user of the mobile terminal 100, and represents at least one image captured in real time by the first camera during the video communication function of the mobile terminal. The first image 101 may also include an environment behind or otherwise surrounding the user, depending on the shooting distance and other settings of the first camera. The second image 102, obtained by the second camera, is an image of the environment surrounding the mobile terminal, and represents at least one image captured in real time by the second camera during the video communication function of the mobile terminal. The first image 101 and the second image 102 are used to create a panoramic view that illustrates the environment surrounding the user while the user performs the video communication function. Further, the panoramic view is transmitted to the other party during the video communication function.

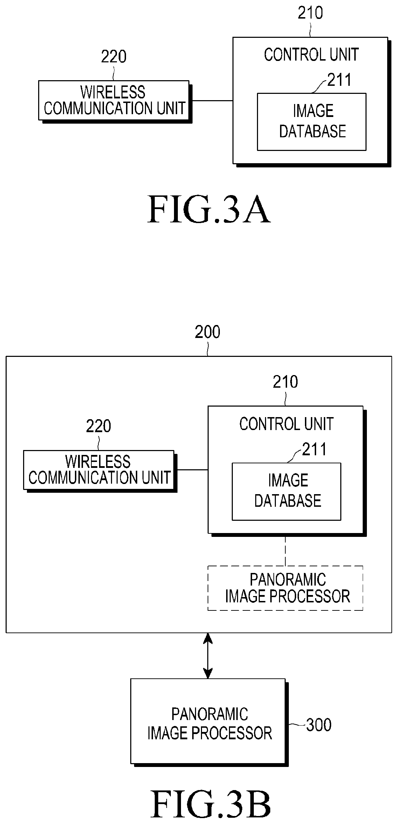

As part of the video communication function, the mobile terminal 100 establishes a communication link 301 with the server 200. The server 200, which may be a local or remote component and is described in more detail below with reference to FIG. 3A, is provided for contribution to the panoramic image created by the mobile terminal 100. The server 200 includes an image database which stores images such as photographs or other images corresponding to different locations.

In an example, during execution of the video communication function, the mobile terminal 100 transmits the first image 101 and the second image 102 to the server 200 via the communication link 301. The server 200 receives the first image 101 and the second image 102 from the mobile terminal 100 and, using the received images, determines the location of the mobile terminal 100. Based on the location of the mobile terminal 100, the first image 101, and the second image 102, the server 200 determines image data from the image database corresponding to the location of the mobile terminal 100. More specifically, the server 200 determines image data that is missing from the first image 101 and the second image 102; that is, image data that is needed to augment the first image 101 and the second image 102 to provide a more complete panoramic image.

The server 200 extracts the determined image data from the image database and provides the extracted image data to the mobile terminal 100 using the communication link 301. Upon receipt of the image data from the server 200, the mobile terminal 100 provides the received image data, the first image 101, and the second image 102 to the panoramic image processor to create a panoramic image during the video communication function. The mobile terminal creates an augmented panoramic image by combining the image data, the first image 101, and the second image 102 received from the server through the panoramic image processor, and the augmented panoramic image is then provided to the other user during execution of the video communication according to user's selection.

As described above, the mobile terminal 100 may be provided with additional cameras to capture additional respective images. A benefit of providing additional cameras is that less image data will be needed from the server 200 in order for the panoramic image processor of the mobile terminal 100 to create a panoramic image. Also, the additional images will allow the server 200 to more easily determine the location of the mobile terminal 100. However, during communication with the server 200, the mobile terminal need not transmit all images to the server 200, regardless of how many images are captured. For example, as described above, if the mobile terminal 100 is provided with two cameras and captures a first image 101 and a second image 102, the mobile terminal does not need to transmit the entire first image 101 and the entire second image 102 to the server 200. Rather, the mobile terminal 100 may transmit only partial images to the server 200 depending on variables such as the speed at which the surrounding environment changes, limitations of the communication link 301, and the like.

For example, if the user of the mobile terminal 100 is stationary during a video call, the mobile terminal 100 may transmit only partial images of a second image 102. Alternatively, it may be necessary for the mobile terminal 100 to transmit all images to the server 200 if the location changes rapidly.

In another example, the mobile terminal 100 not only provides the first image 101 and the second image 102 to the server 200, but also provides metadata to the server 200. Using the location information of the mobile terminal included in the metadata received from the mobile terminal, the server 200 is able to more accurately determine the image data corresponding to the location of the mobile terminal 100. As an example, the metadata may include latitude and longitude information of the mobile terminal 100. As another example, the metadata may include information regarding landmarks nearby the mobile terminal 100. When metadata is provided to the server 200, the server 200 may be able to determine corresponding image data for creating a panoramic image without as much image from the mobile terminal 100. Thus, it may be more efficient to transmit metadata and image data which typically includes a lower quantity of data than all images.

Again, based on the received image information and any provided metadata, the server 200 determines corresponding image data and provides the corresponding image data to the mobile terminal 100 for use by the panoramic image processor. If there occurs a situation in which the server 200 is unable to determine image data corresponding to the location of the mobile terminal 100, or the server 200 does not have access to image data corresponding to the location of the mobile terminal, the panoramic image processor of the mobile terminal 100 will create a panoramic image using only the images captured by the cameras of the mobile terminal 100.

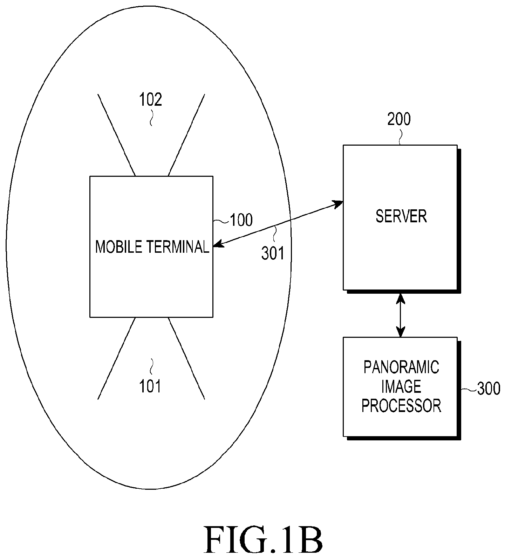

FIG. 1B illustrates a system for implementing a panoramic video communication function according to a second exemplary embodiment of the present invention.

Referring to FIG. 1B, the system includes a mobile terminal 100, a server 200, and a panoramic image processor 300. The mobile terminal 100 and the server 200 are substantially the same as the mobile terminal 100 and the server 200 described with reference to FIG. 1A and their description will not be repeated here for conciseness.

However, it is noted that the mobile terminal 100 of FIG. 1B does not include a panoramic image sensor. Rather, in the exemplary embodiment of FIG. 1B, the panoramic image processor 300 is provided as a component that is separate from the mobile terminal 100.

In the case of FIG. 1B, the mobile terminal 100 again captures images 101 and 102 through the first camera and the second camera, and provides the captured images to server 200 via communication link 301. As in the exemplary embodiment of FIG. 1A, the server 200 again determines image data from the first image 101 and the second image 102 corresponding to the location of the mobile terminal 100. That is, the server 200 determines from the image database, image data based on the captured images 101 and 102 received from the mobile terminal 100, based on metadata received from the mobile terminal 100, or based on a combination of both the captured images 101 and 102 and the metadata. In this case however, the server 200 provides the image data to the panoramic image processor 300 that is located remotely from the mobile terminal 100, rather than to the mobile terminal 100.

The panoramic image processor 300 creates a panoramic image for use by the mobile terminal 100 during a video communication function and provides the panoramic image to the server 200. The server 200 transmits the panoramic image to the mobile terminal using communication link 301.

According to embodiments of the present invention, the panoramic image processor 300 may be a component of the server 200, may be a stand alone component that is located remotely from both the mobile terminal 100 and the server 200, or may be a component of an apparatus that is located remotely from both the mobile terminal 100 and the server 200.

FIG. 2 is a block diagram of a mobile terminal for providing a panoramic image according to an exemplary embodiment of the present invention.

Referring to FIG. 2, the mobile terminal 100 includes a first camera 110, a second camera 120, a wireless communication unit 130, a control unit 140, a display unit 150, a location determining unit 160, an input unit 170, and a storage unit 180.

The first camera 110 and the second camera 120 each includes a camera sensor (not shown) for capturing an image and converting an optical signal corresponding to the captured image into an analog electrical signal. Each of the first camera 110 and the second camera 120 also includes a signal processor (not shown) for converting the analog electrical signal into digital data. Each camera sensor may be a Charge-Coupled Device (CCD) sensor or a Complementary Metal-Oxide-Semiconductor (CMOS) sensor, and the signal processor may be a Digital Signal Processor (DSP). The camera sensor and the signal processor may be realized as separate entities or as a single entity. More particularly, during a video communication function, the first camera 110 captures a first image, for example an image of the user, and the second camera 120 captures a second image, such as scenery surrounding the mobile terminal 100. Each of first camera 110 and the second camera 120 forwards the respective captured image to the control unit 140.

While only two cameras are illustrated in FIG. 2, it is to be understood that this is merely for ease of description and not to be considered a limitation. Rather, it is to be understood that additional cameras may be provided to obtain additional images for use in creating a panoramic image for transmission during a video communication function.

The wireless communication unit 130 sends and receives data for wireless communication of the mobile terminal 100. The wireless communication unit 130 may include a Radio Frequency (RF) transmitter for up-converting the frequency of a signal to be transmitted and amplifying the signal, and an RF receiver for low-noise amplifying a received signal and down-converting the frequency of the signal. The wireless communication unit 130 may receive data through a wireless channel and forward the received data to the control unit 140, and may transmit data from the control unit 140 through the wireless channel. More particularly, the wireless communication unit 130 may receive a contact such as a call, a Short Message Service (SMS) message, a Multimedia Message Service (MMS) message or an e-mail from an external mobile terminal and forward the received data to the control unit 140. During execution of a video communication function by the mobile terminal 100, the wireless communication unit 130 receives images of the caller from an external mobile terminal and transmits images to the caller of the external mobile terminal. More specifically, during execution of the video communication function, the wireless communication unit 130 transmits an image of the user captured by the first camera 110 as well as a panoramic image created by images captured by the first camera 110 and the second camera 120 and augmented by image data received from a server. Furthermore, the wireless communication unit 130 may receive image data from a server that is located remotely from the mobile terminal 100.

The display unit 150 may be realized using Liquid Crystal Display (LCDs) devices, Organic Light Emitting Diodes (OLEDs), or Active Matrix Organic Light Emitting Diodes (AMOLEDs). The display unit 150 provides the user with various information such as menus, input data, function-setting data, and the like in a visible form. The display unit 150 may output a boot screen, an idle screen, a menu screen, a call handling screen, and other application screens. According to an exemplary embodiment of the present invention, the display unit 150 may also output images received and transmitted during execution of a video communication function. For example, the display unit 150 may output the image of a user of another mobile terminal with which the mobile terminal 100 is conducting a video communication. Furthermore, the display unit 150 may output a panoramic image which is to be transmitted to the user of the other mobile terminal. Still further, the display unit 150 may output a panoramic image to be transmitted along with a menu or a similar screen with which the user may select to transmit the panoramic image. That is, the user may be provided with an opportunity to review the panoramic image prior to its transmission to the other user.

The location determining unit 160 is provided to determine a location of the mobile terminal 100. In an embodiment, the location determining unit 160 includes a Global Positioning System (GPS) receiver. In that case, the determined location information generally includes the latitude, the longitude, and the height value indicating the position of the mobile terminal 100. Among this information, the latitude and the longitude information should necessarily be determined but, in some cases, the height information may not be determined. In an alternative embodiment, the location information may be acquired by means of a different position information providing service, such as a Location Based Service (LBS), without being limited to the GPS receiver. The location information determined by the location determining unit 160 is provided to the controller 140.

The location determining unit 160 may store the metadata including the current location information of the mobile terminal in the storing unit 180. Alternatively, during execution of the video communication function of the mobile terminal, if creation of a panoramic image is selected, the metadata including the current location information of the mobile terminal determined by the location determining unit 160 may be created.

The input unit 170 generates a key signal corresponding to user manipulation for controlling the mobile terminal 100 and sends the key signal to the control unit 140. The input unit 170 may include a keypad having alphanumeric and direction keys arranged in a 3^{∗}4 or QWERTY layout, or a touch panel. The input unit 170 may further include a button key, a jog key, a wheel key, and the like. The input unit 170 generates an input signal for executing an application (e.g., related to call handling, music playback, reproduction of still and moving images, photographs, Digital Multimedia Broadcasting (DMB) reception or the like) according to user input, and sends the input signal to the control unit 140. More particularly, when executing a video communication function, the input unit 170 allows the user to control the capturing of images by the first camera 110 and the second camera 120, allows selection of a panoramic image, allows for control of communication with a server, and the like.

The storage unit 180 stores programs and data used for operation of the mobile terminal 100, and may include a program region and a data region. The program region may store a control program for controlling the overall operation of the mobile terminal 100, an Operating System (OS) for booting the mobile terminal 100, an application program for playing back multimedia content, and application programs necessary for optional functions of the mobile terminal 100 related to photography, sound, and still and moving images. The data region may store data generated in the course of using the mobile terminal 100, such as still images, moving images, phonebooks, audio data, and the like. More particularly, the storage unit 180 may store images captured by the first camera 110 and the second camera 120, metadata including data corresponding to the location of the mobile terminal 100, image data received from a server, and the like. During execution of a video communication function, the storage unit 180 may be accessed by the control unit 140 to provide the stored metadata to a server.

The control unit 140 controls the overall functions of the mobile terminal 100 and includes a panoramic image processor 141. According to an exemplary embodiment, the panoramic image processor 141 creates a panoramic image for use during a video communication function performed by the mobile terminal 100. The panoramic image processor 141 receives images captured by the first camera 110 and the second camera 120. Using the received images, the panoramic image processor 141 combines the images to create the panoramic image for use in the video communication function. Furthermore, the panoramic image processor 141 receives image data provided from a server and uses the image data received from the server to augment the panoramic image created based on the images received from the first camera 110 and the second camera 120. The panoramic image processor 141 provides the panoramic image to the wireless communication unit 130 for transmission during execution of a video communication function. Also, the panoramic image processor 141 may provide the panoramic image to the display unit 150 for viewing by the user of the mobile terminal 100 prior to its transmission.

Of course, as described above with reference to FIG. 1B, the mobile terminal 100 may be provided without the panoramic image processor 141 if a panoramic image processor, which creates and provides a panoramic image, is provided remotely.

FIG. 3A is a block diagram of a server for providing image data according to the first exemplary embodiment of the present invention.

Referring to FIG. 3A, the server 200 includes a control unit 210 and a wireless communication unit 220. The control unit 210 also includes an image database 211 that stores image data relating to a plurality of locations. The image data stored in the image database 211 may include photographs or other image information previously provided by the user of the mobile terminal 100 or by a distinct owner/operator of the server 200. The image data contained in the image database 211 may further include location information which identifies the location of the image data. For example, the image data may include coordinate information such as latitude and longitude regarding the location from which the image data was obtained, or may include information regarding a landmark with which the image data is associated.

The wireless communication unit 220 is provided for receiving information from a mobile terminal and for transmitting information to the mobile terminal. For example, the wireless communication unit 220 may receive all or partial images from a mobile terminal and provide the received images to the control unit 210. The control unit 210 may process and evaluate the image to determine a location associated with the image. Based on the determined location, the control unit 210 may determine if the image database 211 includes image data associated with the location. If the control unit 210 determines that the image database 211 contains image data associated with the location, the control unit 210 accesses the image data associated with the location, and provides the accessed image data to the wireless communication unit 220 for transmission. Alternatively, if the image database 211 does not include image data associated with the location, the control unit 210 transmits a message indicating that image data associated with the location does not exist to the mobile terminal through the wireless communication unit 220.

The wireless communication unit 220 may also receive metadata from a mobile terminal. The metadata may include coordinate information such as a latitude and longitude of the mobile terminal or may include information regarding a nearby landmark. In either case, the wireless communication unit 220 provides the metadata to the control unit 210, which determines if the image database 211 includes image data associated with the location included in the received metadata. For example, the image data stored in the image database 211 is cataloged using associated coordinates included in the respective image data, the control unit 210 may search the image database 211 using the coordinates. Alternatively, if the image data is cataloged by landmarks, the control unit 210 may search the image database using the landmark information. Once associated image data is obtained by the control unit 210 from the image database 211, the associated image data is provided to the wireless communication unit 220 for transmission to the mobile terminal.

Although the communication unit 220 of FIG. 3A is described as being wireless, in an alternative exemplary embodiment, the communication unit 220 may include a wired component. That is, the communication unit 220 may provide either or both a wired connection and a wireless connection. Notably, the server 200 is typically connected to the Internet such that the communication unit provides a wired connection.

FIG. 3B is a block diagram of a server for providing image data according to the second exemplary embodiment of the present invention.

Referring to FIG. 3B, the server 200, including a control unit 210, an image database 211, and a wireless communication unit 220, is substantially the same as the server 200 illustrated in FIG. 3A. Thus, a description of these components will not be provided again for sake of conciseness. However, the server 200 of FIG. 3B further includes a panoramic image processor 300.

The panoramic image processor 300 may be provided as a component of the server 200 or as a component that is located remotely from the server 200. If the panoramic image processor 300 is located remotely from the server 200, the panoramic image processor 300 may be a stand-alone component, or a component of another apparatus that is located remotely from the server 200.

The panoramic image processor 300 receives image data from the server 200 depending on its location. That is, if the panoramic image processor 300 is local to server 200, the image data may be provided by internal communication means of the server 200, such as a bus line, or other local communication method. On the other hand, if the panoramic image processor 300 is located remotely from the server 200, the image data may be provided to the panoramic image processor 300 using the wireless communication unit 220 or through a wired network connection, such as a backhaul connection.

Using image data received from the server 200 as well as image information provided by a mobile terminal, the panoramic image processor 300 creates a panoramic image for use in a video communication function of the mobile terminal. That is, the panoramic image processor 300 receives image data provided from the server 200 and creates the panoramic image based on the images received from the cameras of the mobile terminal. The panoramic image processor 300 provides the panoramic image to the server 200 using either an internal or external communication means depending on its location as discussed above.

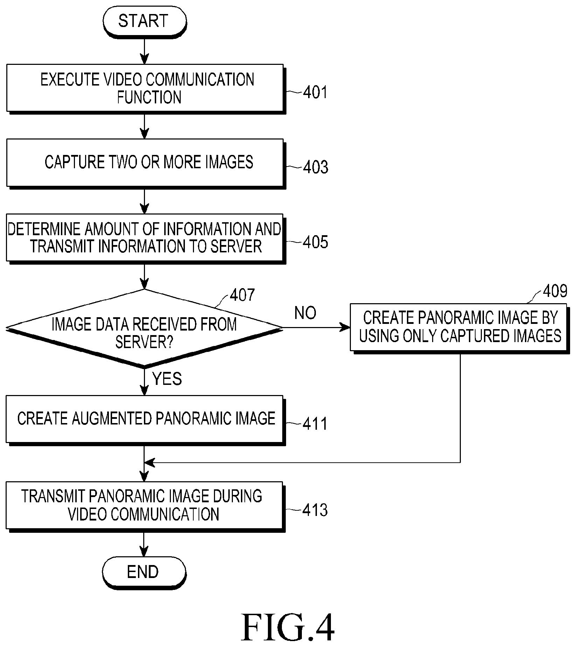

FIG. 4 is a flowchart showing for a process of executing a video communication function including a panoramic image in a mobile terminal according to the first embodiment of the present invention. In an embodiment of the present invention, it is described that only an image captured in the mobile terminal is provided to the server.

Referring to FIG. 4, the mobile terminal executes a video communication function in step 401. During execution of the video communication function, the mobile terminal captures two or more images in step 403 using cameras of the mobile terminal. As an example, the mobile terminal may capture a first image including an image of the user of the mobile terminal and a second image including scenery surrounding the mobile terminal.

In step 405, the mobile terminal determines an amount of image information to transmit to a server and transmits the information. As an example, the mobile terminal determines a change in obtained images from the first camera and the images obtained from the first camera. If the image is changing quickly, that is, if a movement change amount of the mobile terminal based on a change of a pixel value of each image frame received through a camera for a time period is greater than a threshold value, the mobile terminal may determine to send all images to the server.

However, if the mobile terminal is substantially stationary such that the surrounding scenery and corresponding image are not changing quickly, that is, if a movement change amount of the mobile terminal based on a change of a pixel value of each image frame received through a camera for a time period is less than a threshold value, the mobile terminal may determine to send only partial images.

After transmission of the image to the server, the mobile terminal determines in step 407 if image data is received from the server. If it is determined in step 407 that the image data is received, the mobile terminal transmits the image data received from the server to the panoramic image processor, and creates an augmented panoramic image through the panoramic image processor in step 411. On the other hand, if it is determined in step 407 that image data is not received, the mobile terminal creates, through the panoramic image processor, a panoramic image in step 409 using only the two or more images captured in step 403. After either of steps 409 or 411, the mobile terminal transmits the panoramic image during a video communication in step 413 and then ends the procedure.

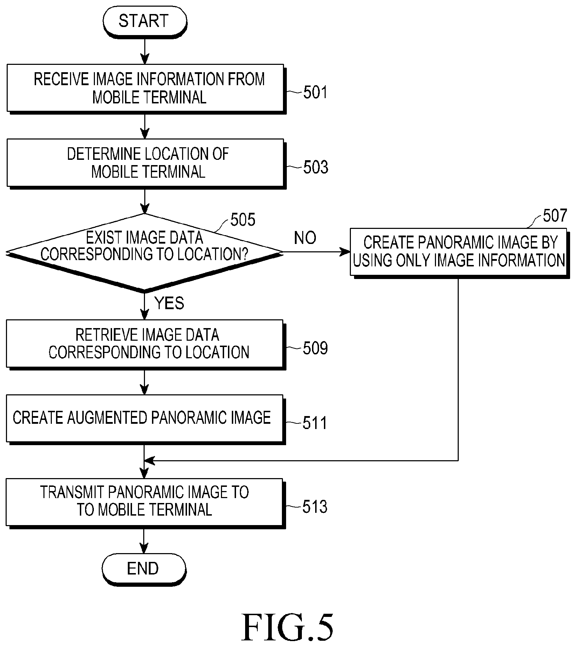

FIG. 5 is a flowchart showing a process of supporting a video communication function by a server having a panoramic image processor according to an exemplary embodiment of the present invention. In an embodiment of the present invention, it is described that only an image captured in the mobile terminal is provided to the server.

Referring to FIG. 5, the server receives an image provided by a mobile terminal which performs video communication in step 501. The image information may be received through a wired or wireless communication with the server. In step 503, the server determines a location of the mobile terminal from the received image. In an embodiment, the server may determine the location of the mobile terminal based on the image received from the mobile terminal, based on metadata received from the mobile terminal, or based on both the image and metadata received.

Based on the determined location of the mobile terminal, the server searches the image database to determine if image data corresponding to the location exists, in step 505. For example, the server may determine if an image database includes image data corresponding to the determined location of the mobile terminal.

If it is determined in step 505 that the image data corresponding to the location does not exist, the server proceeds to step 507 and creates a panoramic image using only the image information received from the mobile terminal. In an embodiment, the server provides the image information to a panoramic image processor for creation of the panoramic image. As discussed above, the panoramic image processor may be either a component that is local to the server or a component that is located remotely from the server.

If it is determined in step 505 that the image data corresponding to the location exists, the server proceeds to step 509 and retrieves image data corresponding to the determined location of the mobile terminal from the image database. The server then proceeds to step 511 in which an augmented panoramic image is created. In step 511, the server transmits the retrieved image data to a panoramic image processor that is located either locally or remotely, and the panoramic image is created by the panoramic image processor. To create the panoramic image, the panoramic image processor augments the image transmitted by the mobile terminal with the image data retrieved by the server. Once the augmented panoramic image is transmitted to the server, in step 513, the server transmits the panoramic image created by the panoramic image processor to the mobile terminal for use during a video communication function and then ends the procedure.

According to the present invention, by providing a method and apparatus for performing video communication in a mobile terminal, during execution of video communication, user's image data and surrounding environment image data can be created as panoramic image data and the panoramic image data can be provided to a counterpart mobile terminal.

While the invention has been shown and described with reference to certain exemplary embodiments thereof, it will be understood by those skilled in the art that various changes may be made therein without departing from the scope of the invention as defined by the appended claims.

## Claims

1. A method for performing video communication in a mobile terminal, the method comprising:
transmitting image data captured by a second camera of the mobile terminal (100) to a server(200) during video communication with another mobile terminal using a first camera of the mobile terminal;
receiving image data associated with the captured image data from the server (200), creating, at the mobile terminal (100), a panoramic image by using the captured image data and the associated image data during the video communication; and
transmitting the created panoramic image to the another mobile terminal which is performing the video communication.

2. The method of claim 1, wherein the transmitting to the server comprises further transmitting metadata comprising location information of the mobile terminal to the server to allow the server to determine the location information of the mobile terminal and extract the associated image data through the determined location information.

3. The method of claim 1, further comprising:
upon receiving the image data from the mobile terminal, determining, by the server, a location of the mobile terminal through the received image data;
if image data associated with the location of the mobile terminal exists in an image database, extracting, by the server, the associated image data and transmitting the extracted image data to the mobile terminal; and
unless the image data associated with the location of the mobile terminal exists in the image database, transmitting, by the server, a message indicating non-existence of the associated image data to the mobile terminal.

4. A method for performing video communication in a mobile terminal, the method comprising:
transmitting image data captured by a second camera of the mobile terminal (100) to a server (200) during video communication with another mobile terminal using a first camera of the mobile terminal;
receiving, from the server (200), a panoramic image created using the captured image data during the video communication; and
transmitting the received panoramic image to the another mobile terminal which is performing the video communication.

5. The method of claim 4, wherein the transmitting to the server comprises further transmitting metadata comprising location information of the mobile terminal to the server to allow the server to determine the location information of the mobile terminal and extract the associated image data through the determined location information.

6. The method of claim 4, further comprising:
upon receiving the image data from the mobile terminal, determining, by the server, a location of the mobile terminal through the received image data;
if image data associated with the location of the mobile terminal exists in an image database, extracting, by the server, the associated image data and creating, by the server, the panoramic image by using the received image data and the associated image data; and
unless the image data associated with the location of the mobile terminal exists in the image database, creating, by the server, the panoramic image by using the received image data.

7. An apparatus for performing video communication in a mobile terminal, the apparatus comprising:
a first camera;
a second camera; and
a control unit configured to:
transmit image data captured by a second camera of the mobile terminal (100) to a server (200) during video communication with another mobile terminal using a first camera of the mobile terminal,
receive image data associated with the captured image data from the server, create at the mobile terminal (100), a panoramic image by using the captured image data and the associated image data during the video communication, and
transmit the created panoramic image to the another mobile terminal which is performing the video communication.

8. The apparatus of claim 7, wherein, the control unit is configured to further transmit metadata comprising location information of the mobile terminal to the server to allow the server to determine the location information of the mobile terminal and extract the associated image data through the determined location information.

9. The apparatus of claim 7, wherein the server, upon receiving the image data from the mobile terminal, is configured to: determine a location of the mobile terminal through the received image data, extract the associated image data and transmit the extracted image data to the mobile terminal if image data associated with the location of the mobile terminal exists in an image database, and further configured to transmit a message indicating non-existence of the associated image data to the mobile terminal unless the image data associated with the location of the mobile terminal exists in the image database.

10. An apparatus for performing video communication in a mobile terminal, the apparatus comprising:
a first camera;
a second camera; and
a control unit configured to:
transmit image data captured by a second camera of the mobile terminal (100) to a server (200) during video communication with another mobile terminal using a first camera of the mobile terminal,
receive, from the server (200), a panoramic image created using the captured image data during the video communication; and
transmit the received panoramic image to the another mobile terminal which is performing the video communication.

11. The apparatus of claim 10, wherein the control unit is configured to further transmit metadata comprising location information of the mobile terminal to the server to allow the server to determine the location information of the mobile terminal and extract the associated image data through the determined location information.

12. The apparatus of claim 10, wherein the server, upon receiving the image data from the mobile terminal, is configured to: determine a location of the mobile terminal through the received image data, if image data associated with the location of the mobile terminal exists in an image database, extract the associated image data and create the panoramic image by using the received image data and the associated image data, and unless the image data associated with the location of the mobile terminal exists in the image database, create the panoramic image by using the received image data.

## Patentansprüche

1. Verfahren zur Durchführung einer Videokommunikation in einem mobilen Endgerät, wobei das Verfahren folgendes umfasst:
Übermitteln von durch eine zweite Kamera des mobilen Endgeräts (100) erfassten Bilddaten an einen Server (200) während der Videokommunikation mit einem anderen mobilen Endgerät unter Verwendung einer ersten Kamera des mobilen Endgeräts;
Empfangen von den erfassten Bilddaten zugeordneten Bilddaten von dem Server (200);
Erzeugen eines Panoramabilds an dem mobilen Endgerät (100) unter Verwendung der erfassten Bilddaten und der zugeordneten Bilddaten während der Videokommunikation; und
Übermitteln des erzeugten Panoramabilds an das andere mobile Endgerät, das die Videokommunikation durchführt.

2. Verfahren nach Anspruch 1, wobei das Übermitteln an den Server das weitere Übermitteln von Metadaten, die Standortinformationen des mobilen Endgeräts umfassen, an den Server umfasst, um es dem Server zu ermöglichen, die Standortinformationen des mobilen Endgeräts zu bestimmen und die zugeordneten Bilddaten durch die bestimmten Standortinformationen zu extrahieren.

3. Verfahren nach Anspruch 1, ferner umfassend:
nach dem Empfangen der Bilddaten von dem mobilen Endgerät, Bestimmen eines Standorts des mobilen Endgeräts durch den Server über die empfangenen Bilddaten;
wenn dem Standort des mobilen Endgeräts zugeordnete Bilddaten in einer Bilddatenbank existieren, Extrahieren der zugeordneten Bilddaten und Übermitteln der extrahierten Bilddaten durch den Server an das mobile Endgerät; und
sofern die dem Standort des mobilen Endgeräts zugeordneten Bilddaten nicht in der Bilddatenbank existieren, Übermitteln einer Nachricht durch den Server an das mobile Endgerät, die anzeigt, dass die zugeordneten Bilddaten nicht existieren.

4. Verfahren zur Durchführung einer Videokommunikation in einem mobilen Endgerät, wobei das Verfahren folgendes umfasst:
Übermitteln von durch eine zweite Kamera des mobilen Endgeräts (100) erfassten Bilddaten an einen Server (200) während der Videokommunikation mit einem anderen mobilen Endgerät unter Verwendung einer ersten Kamera des mobilen Endgeräts;
Empfangen eines Panoramabilds von dem Server (200), das unter Verwendung der erfassten Bilddaten während der Videokommunikation erzeugt worden ist; und
Übermitteln des empfangenen Panoramabilds an das andere mobile Endgerät, das die Videokommunikation durchführt.

5. Verfahren nach Anspruch 4, wobei das Übermitteln an den Server das weitere Übermitteln von Metadaten, die Standortinformationen des mobilen Endgeräts umfassen, an den Server umfasst, um es dem Server zu ermöglichen, die Standortinformationen des mobilen Endgeräts zu bestimmen und die zugeordneten Bilddaten durch die bestimmten Standortinformationen zu extrahieren.

6. Verfahren nach Anspruch 4, ferner umfassend:
nach dem Empfangen der Bilddaten von dem mobilen Endgerät, Bestimmen eines Standorts des mobilen Endgeräts durch den Server über die empfangenen Bilddaten;
wenn dem Standort des mobilen Endgeräts zugeordnete Bilddaten in einer Bilddatenbank existieren, Extrahieren der zugeordneten Bilddaten durch den Server und Erzeugen des Panoramabilds durch den Server unter Verwendung der empfangenen Bilddaten und der zugeordneten Bilddaten; und Übermitteln der extrahierten Bilddaten durch den Server an das mobile Endgerät; und
sofern die dem Standort des mobilen Endgeräts zugeordneten Bilddaten nicht in der Bilddatenbank existieren, Erzeugen des Panoramabilds durch den Server unter Verwendung der empfangenen Bilddaten.

7. Vorrichtung zur Durchführung einer Videokommunikation in einem mobilen Endgerät, wobei die Vorrichtung folgendes umfasst
eine erste Kamera;
eine zweite Kamera; und
eine Steuereinheit, die für folgende Zwecke gestaltet ist:
Übermitteln von durch eine zweite Kamera des mobilen Endgeräts (100) erfassten Bilddaten an einen Server (200) während der Videokommunikation mit einem anderen mobilen Endgerät unter Verwendung einer ersten Kamera des mobilen Endgeräts;
Empfangen von den erfassten Bilddaten zugeordneten Bilddaten von dem Server; Erzeugen eines Panoramabilds an dem mobilen Endgerät (100) unter Verwendung der erfassten Bilddaten und der zugeordneten Bilddaten während der Videokommunikation; und
Übermitteln des erzeugten Panoramabilds an das andere mobile Endgerät, das die Videokommunikation durchführt.

8. Vorrichtung nach Anspruch 7, wobei die Steuereinheit ferner gestaltet ist zum Übermitteln von Metadaten, die Standortinformationen des mobilen Endgeräts umfassen, an den Server, um es dem Server zu ermöglichen, die Standortinformationen des mobilen Endgeräts zu bestimmen und die zugeordneten Bilddaten durch die bestimmten Standortinformationen zu extrahieren.

9. Vorrichtung nach Anspruch 7, wobei der Server so gestaltet ist, dass er nach dem Empfang der Bilddaten von dem mobilen Endgerät folgendes ausführt: Bestimmen eines Standorts des mobilen Endgeräts über die empfangenen Bilddaten; Extrahieren der zugeordneten Bilddaten und Übermitteln der extrahierten Bilddaten an das mobile Endgerät, wenn dem Standort des mobilen Endgeräts zugeordnete Bilddaten in einer Bilddatenbank existieren; und wobei der Server ferner gestaltet ist zum Übermitteln einer Nachricht an das mobile Endgerät, die anzeigt, dass die zugeordneten Bilddaten nicht existieren, sofern die dem Standort des mobilen Endgeräts zugeordneten Bilddaten nicht in der Bilddatenbank existieren.

10. Vorrichtung zur Durchführung einer Videokommunikation in einem mobilen Endgerät, wobei die Vorrichtung folgendes umfasst
eine erste Kamera;
eine zweite Kamera; und
eine Steuereinheit, die für folgende Zwecke gestaltet ist:
Übermitteln von durch eine zweite Kamera des mobilen Endgeräts (100) erfassten Bilddaten an einen Server (200) während der Videokommunikation mit einem anderen mobilen Endgerät unter Verwendung einer ersten Kamera des mobilen Endgeräts;
Empfangen eines unter Verwendung der während der Videokommunikation erfassten Bilddaten erzeugten Panoramabilds von dem Server (200); und
Übermitteln des empfangenen Panoramabilds an ein anderes mobiles Endgerät, das die Videokommunikation durchführt.

11. Vorrichtung nach Anspruch 10, wobei die Steuereinheit ferner gestaltet ist zum Übermitteln von Metadaten, die Standortinformationen des mobilen Endgeräts umfassen, an den Server, um es dem Server zu ermöglichen, die Standortinformationen des mobilen Endgeräts zu bestimmen und die zugeordneten Bilddaten durch die bestimmten Standortinformationen zu extrahieren.

12. Vorrichtung nach Anspruch 10, wobei der Server so gestaltet ist, dass er nach dem Empfang der Bilddaten von dem mobilen Endgerät folgendes ausführt: Bestimmen eines Standorts des mobilen Endgeräts über die empfangenen Bilddaten; Extrahieren der zugeordneten Bilddaten und Erzeugen des Panoramabilds unter Verwendung der empfangenen Bilddaten und der zugeordneten Bilddaten, wenn dem Standort des mobilen Endgeräts zugeordnete Bilddaten in einer Bilddatenbank existieren; und Erzeugen des Panoramabilds unter Verwendung der empfangenen Bilddaten, sofern die dem Standort des mobilen Endgeräts zugeordneten Bilddaten nicht in der Bilddatenbank existieren.

## Revendications

1. Procédé pour exécuter une communication vidéo dans un terminal mobile, le procédé comprenant les étapes :
transmission des données d'image capturées par une seconde caméra du terminal mobile (100) à un serveur (200) pendant une communication vidéo avec un autre terminal mobile utilisant une première caméra du terminal mobile ;
réception des données d'image associées aux données d'image capturées provenant du serveur (200),
création, au niveau du terminal mobile (100), d'une image panoramique en utilisant les données d'image capturées et les données d'image associées pendant la communication vidéo ; et
transmission de l'image panoramique créée à l'autre terminal mobile qui exécute la communication vidéo.

2. Procédé selon la revendication 1, la transmission au serveur comprenant en outre la transmission de métadonnées comprenant des informations de localisation du terminal mobile au serveur pour permettre au serveur de déterminer les informations de localisation du terminal mobile et d'extraire les données d'image associées par l'intermédiaire des informations de localisation déterminées.

3. Procédé selon la revendication 1, comprenant en outre :
lors de la réception des données d'image en provenance du terminal mobile, détermination, par le serveur, d'un emplacement du terminal mobile par l'intermédiaire des données d'image reçues ;
si des données d'image associées à l'emplacement du terminal mobile existent dans une base de données d'images, extraction, par le serveur, des données d'image associées et transmission des données d'image extraites au terminal mobile ; et
à moins que les données d'image associées à l'emplacement du terminal mobile n'existent dans la base de données d'images, transmission, par le serveur, d'un message indiquant la non-existence de données d'image associées au terminal mobile.

4. Procédé pour exécuter une communication vidéo dans un terminal mobile, le procédé comprenant les étapes :
transmission des données d'image capturées par une seconde caméra du terminal mobile (100) à un serveur (200) pendant une communication vidéo avec un autre terminal mobile utilisant une première caméra du terminal mobile ;
réception, à partir du serveur (200), d'une image panoramique créée en utilisant les données d'image capturées pendant la communication vidéo ; et
transmission de l'image panoramique reçue à l'autre terminal mobile qui exécute la communication vidéo.

5. Procédé selon la revendication 4, la transmission au serveur comprenant en outre la transmission de métadonnées comprenant des informations de localisation du terminal mobile au serveur pour permettre au serveur de déterminer les informations de localisation du terminal mobile et d'extraire les données d'image associées par l'intermédiaire des informations de localisation déterminées.

6. Procédé selon la revendication 4, comprenant en outre :
lors de la réception des données d'image en provenance du terminal mobile, détermination, par le serveur, d'un emplacement du terminal mobile par l'intermédiaire des données d'image reçues ;
si des données d'image associées à l'emplacement du terminal mobile existent dans une base de données d'images, extraction, par le serveur, des données d'image associées et création, par le serveur, de l'image panoramique en utilisant les données d'image reçues et les données d'image associées ; et
à moins que les données d'image associées à l'emplacement du terminal mobile existent dans la base de données d'images, création, par le serveur, de l'image panoramique en utilisant les données d'image reçues.

7. Appareil pour exécuter une communication vidéo dans un terminal mobile, l'appareil comprenant :
une première caméra ;
une seconde caméra ; et
une unité de commande conçue pour :
transmettre des données d'image capturées par une seconde caméra du terminal mobile (100) à un serveur (200) pendant une communication vidéo avec un autre terminal mobile utilisant une première caméra du terminal mobile,
recevoir des données d'image associées aux données d'image capturées provenant du serveur, créer au niveau du terminal mobile (100), d'une image panoramique en utilisant les données d'image capturées et les données d'image associées pendant la communication vidéo, et
transmettre l'image panoramique créée à l'autre terminal mobile qui exécute la communication vidéo.

8. Appareil selon la revendication 7, l'unité de commande étant conçue pour transmettre en outre des métadonnées comprenant des informations de localisation du terminal mobile au serveur pour permettre au serveur de déterminer les informations de localisation du terminal mobile et d'extraire les données d'image associées par l'intermédiaire des informations de localisation déterminées.

9. Appareil selon la revendication 7, le serveur, lors de la réception des données d'image provenant du terminal mobile, étant conçu pour : déterminer un emplacement du terminal mobile par l'intermédiaire des données d'image reçues, extraire les données d'image associées et transmettre les données d'image extraites au terminal mobile si les données d'image associées à l'emplacement du terminal mobile existent dans une base de données d'images, et conçu en outre pour transmettre un message indiquant la non-existence des données d'image associées au terminal mobile à moins que les données d'image associées à l'emplacement du terminal mobile existent dans la base de données d'images.

10. Appareil pour exécuter une communication vidéo dans un terminal mobile, l'appareil comprenant :
une première caméra ;
une seconde caméra ; et
une unité de commande conçue pour :
transmettre des données d'image capturées par une seconde caméra du terminal mobile (100) à un serveur (200) pendant une communication vidéo avec un autre terminal mobile utilisant une première caméra du terminal mobile,
recevoir, à partir du serveur (200), une image panoramique créée en utilisant les données d'image capturées pendant la communication vidéo ; et
transmettre l'image panoramique reçue à l'autre terminal mobile qui exécute la communication vidéo.

11. Appareil selon la revendication 10, l'unité de commande étant conçue pour transmettre en outre les métadonnées comprenant des informations de localisation du terminal mobile au serveur pour permettre au serveur de déterminer les informations de localisation du terminal mobile et d'extraire les données d'image associées par l'intermédiaire des informations de localisation déterminées.

12. Appareil selon la revendication 10, le serveur, à la réception des données d'image provenant du terminal mobile, étant conçu pour : déterminer un emplacement du terminal mobile par l'intermédiaire des données d'image reçues, si des données d'image associées à l'emplacement du terminal mobile existent dans une base de données d'image, extraire les données d'image associées et créer l'image panoramique en utilisant les données d'image reçues et les données d'image associées, et à moins que les données d'image associées à l'emplacement du terminal mobile existent dans la base de données d'image, créer l'image panoramique en utilisant les données d'image reçues.
